# EUROPÄISCHE PATENTSCHRIFT

(11) **EP 3 341 106 B1**
(45) Veröffentlichungstag und Bekanntmachung des Hinweises auf die Patenterteilung: **27.09.2023**
(21) Anmeldenummer: 16745468.5
(22) Anmeldetag: 01.08.2016
(51) Int. Cl.: B01D 35/30, B01D 46/00, B01D 46/24

(54) **EINWEG-FILTRATIONSVORRICHTUNG**
DISPOSABLE FILTRATION DEVICE
DISPOSITIF DE FILTRATION JETABLE

(30) Priorität: 24.08.2015 DE 102015114004
(43) Veröffentlichungstag der Anmeldung: 04.07.2018
(73) Patentinhaber: Sartorius Stedim Biotech GmbH, 37079 Göttingen (DE)
(72) Erfinder: LOEWE, Thomas, 37077 Goettingen (DE); HANDT, Sebastian, 37085 Goettingen (DE); REQUATE, Wilhelm, 37308 Heiligenstadt (DE); HELLWIG, Gerid, 37127 Niemetal (DE); DELL, André, 37434 Gieboldehausen (DE); FRIESE, Thomas, 99752 Bleicherode (DE)
(74) Vertreter: Vigand, Philippe
(86) Internationale Anmeldenummer: PCT/EP2016/068338
(87) Internationale Veröffentlichungsnummer: WO 2017/032560

(56) Entgegenhaltungen:
- WO-A1-91/16124
- WO-A1-03/031020
- WO-A1-2008/071516
- WO-A1-2010/009518
- NL-C- 2 003 669
- US-A1- 2006 186 032
- US-A1- 2015 108 050

## Beschreibung

Die Erfindung betrifft eine Einweg-Filtrationsvorrichtung für den Einsatz in der pharmazeutischen Fertigung von hochwertigen Wirkstoffen, die insbesondere für großvolumige Filtrationsprozesse geeignet ist.

Allgemein finden in der pharmazeutischen Fertigung von hochwertigen Wirkstoffen Einweg-Prozesse aufgrund der damit erreichbaren hohen Flexibilität sowie Einsparung von Zeit, Investitionen und Betriebsaufwand wie Reinigung und deren Validierung und Überprüfung zunehmend Verbreitung. Einweg-Systeme ("disposables", "single use systems") werden für einen größeren Maßstab gewünscht, wobei die Kosten für solche Systeme nicht unrealistisch hoch anwachsen sollen.

Bei Prozessen mit Bioreaktoren, welche jetzt auch als Einweg-Reaktoren in Größen von 500, 1.000 und 2.000 Litern zur Verfügung stehen, besteht ein Bedarf für Medienfiltration sowie der Zellernte nachgeschaltete (post harvest) Filtration von Prozessströmen mit einem Gesamtvolumen von mehreren 1.000 Litern mit hoher Verblockungstendenz. Derart groß angelegte Filtrationsprozesse mit Gesamtfilterflächen von bis zu 50 m² werden derzeit mit Vorrichtungen durchgeführt, bei denen Filterkerzen in Edelstahlgehäusen zum Einsatz kommen. Die Vorrichtungen sind also immer noch auf Wiederverwendung ("re-usable") ausgelegt. Dadurch entstehen Nachteile wie geringe Flexibilität, hoher Reinigungsaufwand etc. Entsprechende Einweg-Lösungen stehen in dieser Größenordnung nicht zur Verfügung.

Grundsätzlich lassen sich zwar einzelne kleine Einweg-Filterkapsulen mit einer maximalen Filterfläche von je 3 m² mittels Clip-Systemen oder mehrere solcher Filterkapsulen mit Schläuchen und Verteilern verbinden. Jedoch sind auf diese Weise gebildete größere Systeme weder handhabbar noch können sie ohne größeren Aufwand produktionsgerecht angeordnet werden. Außerdem besteht keine Möglichkeit, ein solches System so anzuordnen, dass eine zufriedenstellende Entlüftung und Entleerung erfolgen kann. Dies wird nachfolgend genauer erläutert.

Wird eine Vielzahl von Filterkapsulen mit Schläuchen miteinander verbunden, entsteht insgesamt ein instabiles Gebilde. Es besteht die Gefahr, dass sich beim Verpacken, bei der Lagerung, beim Auspacken und beim Aufbau einzelne Teile der Vorrichtung unkontrolliert bewegen, was z. B. zu einem Abreißen von Schläuchen oder zu unerwünschtem Kontakt mit anderen Teilen (einschließlich einer als Sterilitätsbarriere dienenden Folienverpackung) führen kann. Dieser Gefahr von möglichen Beschädigungen kann nur teilweise mit aufwendigen Verpackungslösungen begegnet werden. Das Handling der Vorrichtung bleibt in jedem Fall schwierig, da nicht alle Filterkapsulen gleichzeitig und kontrolliert bewegt und in die spätere Gebrauchsposition gebracht werden können. Vielmehr muss gewährleistet sein, dass eine Filterkapsule nach der anderen ausgepackt und positioniert werden kann. Dies erfordert nicht unerhebliche Schlauchlängen zwischen den Filterkapsulen, um eine insoweit unabhängige Handhabung der einzelnen Filterkapsulen zu ermöglichen. Eine Reduzierung der Schlauchlängen wäre nur möglich, wenn die Vorrichtung in Einzelteilen geliefert wird. Abgesehen vom erhöhten Aufbauaufwand an sich besteht in diesem Fall auch die grundsätzliche Gefahr, dass die Vorrichtung falsch oder fehlerhaft (undichte Anschlüsse) zusammengebaut wird oder dass Teile der Vorrichtung beim Aufbau beschädigt oder kontaminiert werden.

Außerdem wurde erkannt, dass mit langen Schläuchen verbundene Filterkapsulen noch einen weiteren gravierenden Nachteil haben. Allgemein besteht bei pharmazeutischen Einweg-Prozessen ein sehr hohes Interesse, die Prozessanlagen bestmöglich zu entleeren, da die zu filtrierenden Produktlösungen in der Regel einen Wert zwischen 500 und 5.000 EUR je Liter haben. Üblicherweise wird eine Anlage nach dem Prozessieren mit steriler Druckluft oder Stickstoff von der Eingangsseite aus "leergedrückt", d. h. es wird mit einem Gas so viel von der zurückgebliebenen Produktlösung wie möglich durch die Anlage hindurch in einen dahinter angeordneten Behälter gepresst. Sind in der Prozessanlage Membranfilterstufen enthalten, so kann das Gas die Produktlösung zwar bis zur nächsten Membran pressen. Jedoch kann das Gas die mikroporöse Membran nicht passieren, da die Produktlösung durch Kapillarkräfte in den Poren der Membran gehalten wird. Aus diesem Grund ist es vorteilhaft, in jeder Filterstufe der Prozessanlage möglichst wenig 'Totvolumen' hinter der Membran vorzusehen. Die Produktlösung innerhalb dieses Totvolumens kann nämlich nicht mit Hilfe des eingangsseitig angelegten Gasdrucks herausgedrückt werden.

Aus der WO 2010/009518 A1 ist ein Filtrationssystem mit einer Vielzahl von Membranmodulen bekannt, die aufrecht stehend in einem zweidimensionalen Raster angeordnet sind. Bei einer Ausführungsform dieses Filtrationssystems ist ein Tragrahmen in einem Raum zwischen Untergruppen der Module angeordnet. Der Tragrahmen ist an oberen Verteilerblöcken mittels Querträgern angebracht, die sich in Längsrichtung entlang der oberen Verteilerblöcke im Allgemeinen parallel zu äußeren Verteilerrohren erstrecken.

Aufgabe der Erfindung ist es, ein flexibles, vorsterilisierbares anschlussfertiges und - soweit grundsätzlich möglich - integritätstestbares Filtrationssystem zur Verfügung zu stellen, welches mit allen produktberührenden Komponenten einmal genutzt und anschließend schnell ausgetauscht werden kann.

Gelöst wird diese Aufgabe durch eine Einweg-Filtrationsvorrichtung mit den Merkmalen des Anspruchs 1. Vorteilhafte und zweckmäßige Ausgestaltungen der erfindungsgemäßen Vorrichtung sind in den Unteransprüchen angegeben.

Die erfindungsgemäße Einweg-Filtrationsvorrichtung umfasst eine Mehrzahl von Einweg-Filterkapsulen, die durch Leitungen miteinander verbunden sind. Die Filterkapsulen werden von einer starren Halterung getragen.

Die Erfindung beruht auf der Erkenntnis, dass eine starre Halterung für die Filterkapsulen eine erheblich erleichterte Handhabung der gesamten Filtrationsvorrichtung ermöglicht und zudem eine Transportsicherung bietet. Im Gegensatz zu losen Filterkapsulen, die vor der Auslieferung durch Schlauchleitungen miteinander verbunden wurden oder einzelnen Filterkapsulen, die erst am Anwendungsort miteinander verbunden werden, kann die erfindungsgemäße Filtrationsvorrichtung bereits anschlussfertig konfiguriert und aufgebaut ausgeliefert werden. Darüber hinaus ermöglicht die erfindungsgemäße Filtrationsvorrichtung erstmals eine Einweg-Lösung für groß angelegte Filtrationsprozeese. Die Vorrichtung kann im vormontierten Zustand als Ganzes vorsterilisiert und nach dem einmaligen Gebrauch innerhalb kürzester Zeit als Ganzes ausgetauscht werden. Es ist also nicht notwendig, Komponenten der Vorrichtung einzeln zu montieren, zu sterilisieren und wieder zu entfernen, sodass die Vorrichtung insgesamt äußerst flexibel einsetzbar ist.

Damit die vormontierte Filtrationsvorrichtung ohne großen Aufwand sterilisiert werden kann, sollten wenigstens die Halterung und die Leitungen zwischen den Filterkapsulen aus einem sterilisierbaren Material gebildet sein. Das bedeutet, dass die Halterung mit den darin montierten Filterkapsulen und Leitungen in einem Schritt sterilisiert werden können. Entsprechend den bewährten Sterilisationsverfahren sollte das Material vorzugsweise durch Gammastrahlen oder Heißdampf sterilisierbar sein. Besonders vorteilhaft ist die Ausbildung aller vorgenannten Komponenten möglichst aus demselben Material. In diesem Fall sind die Erfüllung und Einhaltung der formalen Anforderungen und Vorschriften bezüglich der Sterilisation vereinfacht im Vergleich zu einer Filtrationsvorrichtung, bei der viele verschiedene Materialien Verwendung finden.

Vorzugsweise sind wenigstens die Halterung und die Leitungen zwischen den Filterkapsulen aus einem autoklavierbaren Material hergestellt. Nach der einmaligen Nutzung der Filtrationsvorrichtung kann diese, bzw. deren wesentlichen Komponenten, dann für einen neuen Gebrauch vorbereitet werden, ohne dass die Vorrichtung in Einzelteile zerlegt werden muss.

Im Hinblick auf die Entleerung und Entlüftung der in der Vorrichtung eingesetzten Filterkapsulen ist es gemäß der Erfindung vorgesehen, dass die Filterkapsulen in ihrer Gebrauchsstellung aufrecht stehen, was durch die starre Halterung der Vorrichtung ermöglicht wird. Ferner ist gemäß der Erfindung ein zentraler Luftfilter für die Entlüftung der Gesamteinheit der Filterkapsulen vorgesehen. Das bedeutet, dass die Entlüftung aller Filterkapsulen an einer einzigen Stelle durchgeführt werden kann.

Außerdem ist es bei aufrechter Position aller Filterkapsulen möglich, diese in ihrer Gesamtheit an einer tiefsten Stelle zu entleeren. An dieser Stelle kann die erfindungsgemäß vorgesehene zentrale Auffangeinrichtung für die Entleerung angeordnet werden.

Insbesondere bei einer aufrechten Position der Filterkapsulen sind Standfüße von Vorteil, auf denen die gesamte Vorrichtung in einer vorgegebenen Stellung sicher und stabil stehen kann. Ein versehentliches Umkippen der Vorrichtung ist dann ausgeschlossen.

Für die Verpackung, den Transport und die Lagerung der erfindungsgemäßen Filtrationsvorrichtung ist vorgesehen, dass die Halterung in allen Richtungen über die Filterkapsulen und die Leitungen hinausragt. Die Halterung spannt durch ihre Außenabmessungen dann z. B. einen virtuellen Würfel, Quader oder eine sonstige dreidimensionale Form auf, innerhalb derer die empfindlichen Komponenten der Vorrichtung geschützt sind. Das Übermaß der Halterung gewährleistet, dass die Vorrichtung in jeder möglichen Stellung auf eine ebene Fläche gestellt werden kann, ohne dass Teile herausstehen und beschädigt werden können.

Die starre Halterung der erfindungsgemäßen Filtrationsvorrichtung bildet ein Gerüst für eine Folienumwicklung der Vorrichtung. Da die Halterung gemäß der Erfindung über die Komponenten der Vorrichtung hinausragt, besteht keine Gefahr, dass beim Umwickeln mit Folie und später beim Transport oder bei der Lagerung der Vorrichtung die Folie beschädigt wird. Dies ist von besonderer Bedeutung, wenn die Vorrichtung vormontiert und vorsterilisiert ist, da die Folie zum Schutz vor Verschmutzung dient und insbesondere als Sterilitätsbarriere auf keinen Fall Schaden nehmen darf. Dank der besonderen Halterung kann die Vorrichtung somit bereits im Reinraum mit Folie umwickelt werden.

Die Halterung umfasst gemäß der Erfindung wenigstens zwei gegenüberliegende Seitenwände, welche durch Querstreben miteinander verbunden sind, an denen Haltemittel für die einzelnen Filterkapsulen vorgesehen sind. Diese Gestaltung erlaubt einen einfachen Zugang zu den Filterkapsulen. Als Haltemittel für die Filterkapsulen können Aufnahmen in den Querstreben, Schellen oder ähnliche Einrichtungen dienen, die ein sicheres und zuverlässiges Halten der Filterkapsulen gewährleisten, ohne dass die Gefahr eines Heraus- oder Umfallens der Filterkapsulen besteht.

Diese Haltemittel können zudem mit elastischen Materialien versehen sein, um während des Transports und auch während des Betriebs eine Stoß- und Vibrationsdämpfung zu gewährleisten.

Für den Einsatz in einem großvolumigen Filtrationsprozess mit mehreren tausend Litern empfiehlt sich ein Aufbau mit wenigstens sechs Filterkapsulen einer Standardgröße von wenigstens 30", die in einem vorgegebenen Raster angeordnet sind.

Die Flexibilität der erfindungsgemäßen Filtrationsvorrichtung wird durch die erfindungsgemäß vorgesehene sterilisierbare Verpackung noch weiter gesteigert. Die Vorrichtung kann beim Anwender samt Verpackung im sterilisierten Zustand gelagert und bei Bedarf innerhalb kürzester Zeit ausgepackt, aufgestellt und in Betrieb genommen werden.

Vorzugsweise spannt die Filtrationsvorrichtung in ihrer Gesamtheit ein Maß auf, welches sich zum Transport auf Standard-Europaletten (EN 13698-1) eignet.

Gemäß einem besonderen Aspekt der Erfindung sind die Leitungen zwischen den Filterkapsulen zumindest großteils als starre Rohrleitungen ausgebildet. Aufgrund der festgelegten Positionen der einzelnen Filterkapsulen in der starren Halterung können auch die Leitungen starr sein, da sich die Filterkapsulen nicht relativ zueinander bewegen können. Starre Rohrleitungen haben gegenüber flexiblen Schlauchleitungen den Vorteil, dass sie sich nicht verfangen und nicht geknickt werden können. Dadurch bedingte Beschädigungen der Leitungen sind somit ausgeschlossen, und Prozessrisiken, wie ungewollte Druckanstiege und daraus resultierende Leckagen, können durch die Verwendung starrer Rohrleitungssysteme drastisch minimiert werden. Außerdem können die starren Rohrleitungen zur Gesamtstabilität der Filtrationsvorrichtung beitragen. Die Rohrleitungen sollten einen für die im Betrieb zu erwartenden Fluidströme ausreichenden Durchmesser haben und insoweit druckstabil sein, dass sie den bei den Filtrationsprozessen typischerweise auftretenden Drücken standhalten können.

In diesem Zusammenhang ist zu beachten, dass Schläuche mit einem Innendurchmesser von 1" (25,4 mm) typischerweise nur bis ca. 3 bar oder maximal 3,5 bar sicher und ohne Leckagerisiko einsetzbar sind. Die für bestimmte Filtrationsprozessen wie auch für die Integritätstests notwendigen Drücke reichen jedoch bis zu 5 bar. Damit sind feste Rohrleitungen die einzige Verbindungsmöglichkeit für Großsysteme, die mit großen Leitungsdurchmessern arbeiten (1" Innendurchmesser und größer) und einen zulässigen Betriebsdruck von mehr als 3,5 bar bis mindestens 5 bar gewährleisten müssen.

Als Alternative zu den Rohrleitungen können die Leitungen zwischen den Filterkapsulen zumindest großteils auch durch mehrere einheitliche Zu- und Ablaufeinheiten gebildet sein. Die einheitlichen Zu- und Ablaufeinheiten können so auf die Größe und das Design der Filterkapsulen abgestimmt werden, dass mehrere gleichartige oder auch unterschiedliche Filterkapsulen in beliebiger Kombination zu einer Einheit zusammengefügt werden können. Bei Verwendung der Zu- und Ablaufeinheiten sind keine zusätzlichen Rohrleitungen zwischen den Filterkapsulen notwendig. Die Filtrationsvorrichtung kann dadurch kompakter aufgebaut werden, sodass auch die Halterung kleiner ausfallen kann. Insgesamt kann also Platz eingespart werden, was insbesondere vorteilhaft für Lagerung und Transport ist.

Bevorzugt weisen die Zu- und Ablaufeinheiten jeweils eine Zulaufeinrichtung und eine Ablaufeinrichtung auf, die mit einem stirnseitigen Zulauf und einem entgegengesetzten stirnseitigen Ablauf einer zugehörigen Filterkapsule verbunden sind. Die beiden Einrichtungen der Zu- und Ablaufeinheit sind also unmittelbar an der jeweiligen Filterkapsule angebracht, sodass keine gesonderten Haltemittel wie für die Rohrleitungen notwendig sind.

Besonders kostengünstig in der Herstellung und vorteilhaft bezüglich der Logistik ist eine Ausführungsform der Zu- und Ablaufeinheit, bei der die Zulaufeinrichtung und die Ablaufeinrichtung wenigstens großteils identisch aufgebaut sind. Dadurch ist es möglich, ein universelles Bauteil entweder als Zulaufeinrichtung oder als Ablaufeinrichtung zu nutzen. Andernfalls wären verschiedene Bauteile erforderlich, die entsprechend ihrer vorgesehenen Verwendung (Zulaufeinrichtung oder Ablaufeinrichtung) unterschieden werden müssten.

Die Zulaufeinrichtung und die Ablaufeinrichtung können durch eine Gehäusewand miteinander verbunden sein. Die zugehörige Filterkapsule ist in diesem Fall in einem Gehäuse aufgenommen, das seitlich durch die umlaufende Gehäusewand begrenzt ist, und dadurch vor äußeren Einflüssen geschützt.

Die einzelnen Filterkapsulen lassen sich auf einfache Weise durch Verbindungsbauteile, wie etwa Rohrverbindungsklemmen, die an Außenanschlüssen der Zu- und Ablaufeinheiten angebracht sind, zu einer Einheit zusammenfügen.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine perspektivische Ansicht einer ersten Ausführungsform der erfindungsgemäßen Einweg-Filtrationsvorrichtung;
- Figur 2 eine perspektivische Ansicht einer zweiten Ausführungsform der erfindungsgemäßen Einweg-Filtrationsvorrichtung;
- Figur 3 eine schematische Darstellung einer nicht-erfindungsgemäßen Einweg-Filtrationsvorrichtung und einer erfindungsgemäßen Einweg-Filtrationsvorrichtung in Draufsicht;
- Figur 4 eine schematische Darstellung einer dritten Ausführungsform der erfindungsgemäßen Einweg-Filtrationsvorrichtung ohne Halterung; und
- Figur 5 eine einzelne Zu- und Ablaufeinheit der dritten Ausführungsform der erfindungsgemäßen Einweg-Filtrationsvorrichtung.

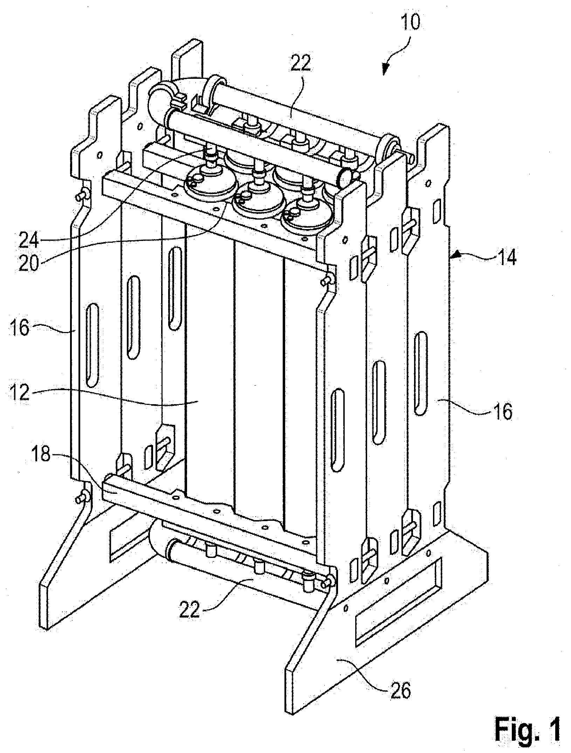

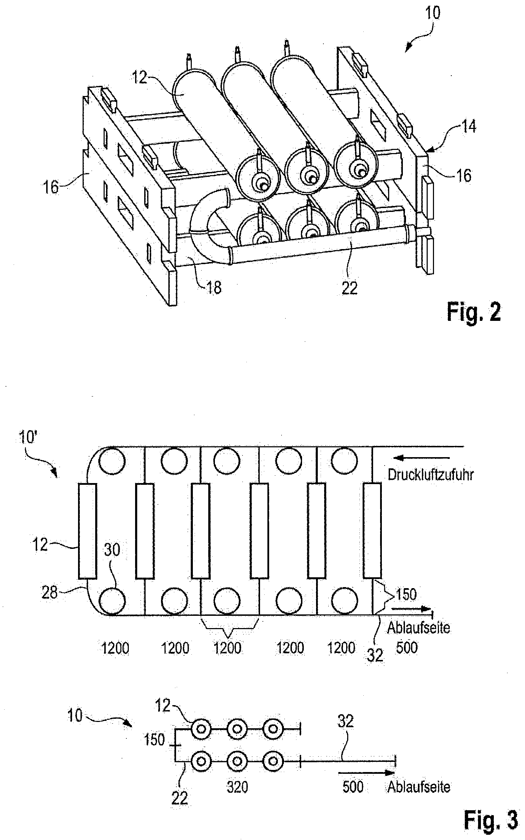

Die in den Figuren 1 und 2 dargestellten Ausführungsformen der Einweg-Filtrationsvorrichtung 10 basieren auf einem bewährten Typ von Einweg-Filterkapsulen 12 der Standardgröße 30" (76,2 cm). Grundsätzlich kann natürlich auch ein anderer Filterkapsulen-Typ verwendet werden. Es können auch unterschiedliche Typen von Filterkapsulen innerhalb derselben Vorrichtung zum Einsatz kommen, soweit dies für sinnvoll erachtet wird. Die übrigen Komponenten der Vorrichtung sind in diesen Fällen entsprechend an die Abmessungen der Filterkapsulen anzupassen.

Die Filterkapsulen 12 werden von einer starren Halterung 14 in einer vorgegebenen Anordnung in Position gehalten. In dem in Figur 1 dargestellten Ausführungsbeispiel sind sechs Filterkapsulen 12 stehend in einem 3 x 2 Raster angeordnet. Selbstverständlich sind auch andere Raster mit mehr oder weniger Filterkapsulen 12 möglich, wobei möglichst kompakte Anordnungen bevorzugt sind. Die Halterung 14 umfasst wenigstens zwei gegenüberliegende Seitenwände 16, die durch Querstreben 18 miteinander verbunden sind. An den Querstreben 18 sind Haltemittel 20 für die einzelnen Filterkapsulen 12 vorgesehen. Die Haltemittel 20 sind mit elastischen Materialien versehen. Dadurch steht sowohl während des Transports als auch während des Betriebs der Filtrationsvorrichtung 10 eine Stoß- und Vibrationsdämpfung für die Filterkapsulen 12 zur Verfügung.

Die Filterkapsulen 12 sind vollständig oder zumindest großteils durch starre, druckstabile Rohrleitungen 22 miteinander verbunden. Der Verlauf der Rohrleitungen 22 ist bestimmt durch den vorgesehenen Betrieb der Filtrationsvorrichtung (Parallel- oder Reihenschaltung der Filterkapsulen 12), wobei die Rohrleitungen 22 die notwendigen Abzweigungen 24 zu den einzelnen Filterkapsulen 12 aufweisen. Soweit erforderlich sind die Rohrleitungen 22 an der Halterung 14 befestigt.

Die wesentlichen Bestandteile der starren Halterung 14, die starren Gehäuse der Filterkapsulen 12 und die starren Rohrleitungen 22 sind allesamt vorzugsweise aus demselben Material gebildet. Dieses Material und ggf. weitere Materialien, die bei der Vorrichtung 10 Verwendung finden (z. B. für etwaige flexible Schlauchleitungen), sind sterilisierbar, insbesondere mittels Gammastrahlung, und nach der einmaligen Nutzung autoklavierbar.

Die Seitenwände 16 der Halterung 14 sind so ausgelegt, dass sie die Filterkapsulen 12 und alle weiteren kritischen Bauteile überragen. Das bedeutet, dass die Seitenwände 16 zumindest höher und breiter sind als die Gesamthöhe bzw. -breite der übrigen starren Komponenten der Vorrichtung 10 und dass etwaige flexible Komponenten, wie etwa Anschlussschlauchleitungen, innerhalb des von den Seitenwänden 16 aufgespannten Volumens fixierbar sind. Dadurch ist sichergestellt, dass die Vorrichtung 10 beim Verpacken, Transport, der Lagerung, Vorbereitung, Nachbereitung und allgemein bei jeder Handhabung in jeder möglichen Stellung auf einer ebenen Fläche platziert werden kann, ohne dass die Gefahr besteht, dass überstehende Teile beschädigt werden oder Produktlösung ausläuft.

Bei dem in Figur 1 dargestellten Ausführungsbeispiel weisen die Seitenwände 16 Standfüße 26 auf, auf denen die gesamte Vorrichtung 10 in einer vorgegebenen Stellung sicher und stabil stehen kann. Diese Stellung entspricht der Betriebsposition, in der die Filterkapsulen 12 allesamt aufrecht stehen.

Des Weiteren ermöglichen die Seitenwände 16 dank ihrer Abmessungen eine vereinfachte Verpackung der Vorrichtung 10 in einer Folie (nicht gezeigt), die als Sterilitätsbarriere dient. Die Vorrichtung 10 kann bereits im Reinraum einfach mit Folie umwickelt werden, oder ein Folienbeutel kann um die Seitenwände 16 gespannt werden, wobei automatisch sichergestellt ist, dass keine harten bzw. scharfkantigen Teile der Vorrichtung in Berührung mit der Folie kommen können, da diese allesamt unbeweglich innerhalb des von den Seitenwänden 16 aufgespannten Volumens angeordnet und unbeweglich sind.

Die Filtrationsvorrichtung 10 kann im vormontierten, d. h. anschlussfertigen Zustand sterilisiert und verpackt werden. Insbesondere kann die gesamte Vorrichtung 10 auf einer oder mehreren Europaletten mit geringem Verpackungs- und Polsteraufwand (nur eine dünne Schaumstoffunterlage und eine Kartonverpackung sind notwendig) vor dem Versand gammasterilisiert werden, oder die gesamte Vorrichtung 10 wird ohne Karton- und Palettenverpackung heißdampfsterilisiert. Die Lagerung und Disposition kann im fertig sterilisierten Zustand der Vorrichtung 10 beim Kunden oder Hersteller erfolgen, sodass die Vorrichtung 10 innerhalb kürzester Zeit versandt und in Betrieb genommen werden kann. Vor und nach der einmaligen Nutzung ist jeweils nur ein einziger Integritätstest notwendig, sofern eine solche Prüfung vorgesehen ist.

In Figur 2 ist beispielhaft eine liegende Variante der Filtrationsvorrichtung 10 gezeigt, wobei einige der Rohrleitungen 22 der besseren Übersichtlichkeit halber weggelassen wurden. Auch hier sind die Filterkapsulen 12 zwischen Seitenwänden 16 angeordnet, welche durch Querstreben 18 miteinander verbunden sind. Bei dieser Variante sind keine eigenen Standfüße vorgesehen, da die Vorrichtung 10 auf den Längsseiten der Seitenwände 16 gut stehen kann. Ansonsten entspricht die Ausführungsform nach Figur 2 im Wesentlichen der Ausführungsform nach Figur 1, sodass die gleichen Vorteile gelten, insbesondere in Bezug auf Verpackung, Sterilisierung und Aufbau.

Die beispielhaft in Figur 1 gezeigte stehende Variante der Filtrationsvorrichtung ist der liegenden Variante im Hinblick auf die Produkt-Rückgewinnung nach dem Ende des eigentlichen Filtrationsprozesses jedoch noch weiter überlegen. Nachfolgend wird anhand eines konkreten Vergleichs zwischen einer nicht-erfindungsgemäßen Filtrationsvorrichtung 10' und einer erfindungsgemäßen Filtrationsvorrichtung 10 die verbesserte Produkt-Rückgewinnung genauer beschrieben.

In Figur 3 oben ist symbolisch eine nicht-erfindungsgemäße Filtrationsvorrichtung 10' mit sechs 30"-Filterkapsulen 12 gezeigt, die mit flexiblen Schläuchen 28 zu einem geschlossenen System verbunden ist. Zum Anwendungsprozess wird eine solche Vorrichtung an den Zu- und Ablaufenden verschlossen und in Beuteln und Kartonage verpackt und mit Gammastrahlung sterilisiert geliefert. Um die parallel verschlauchten Filterkapsulen 12 effektiv und sicher zu verpacken, ein vernünftiges Handling sowie im Extremfall eine senkrechte Montage auf zusätzlichen separaten Halterungen zu ermöglichen und die flexiblen, knickempfindlichen Schläuche 28 beschädigungsfrei transportieren und handhaben zu können, muss eine Mindestschlauchlänge von 1.200 mm zwischen den einzelnen Filterkapsulen 12 vorgesehen werden. Dies ist insbesondere notwendig, um die Schläuche 28 zur Vermeidung von Knicken in Ronden 30 legen zu können.

Die Addition der Schlauchlängen nur auf der Ablaufseite ergibt einschließlich eines 500 mm langen Ablaufschlauchs 32 7.250 mm. Bei einem angenommenen Innendurchmesser von 1" (25,4 mm) für alle Schläuche 28 bedeutet das ein rechnerisches Totvolumen von 3.674 cm³, bei einem ebenfalls noch hinreichenden Innendurchmesser von ¾" (19,05 mm) immerhin noch 2.066 cm³. Wenn die Filterkapsulen 12 im einfachsten Fall liegend eingesetzt werden, ist zudem zu berücksichtigen, dass die Produktlösung aus dem Außengehäuse der Filterkapsulen 12 nicht komplett durch die innenliegenden zylindrischen Membranfilter gepresst werden kann. Es verbleiben zusätzlich 6 x 720 cm³, insgesamt also 4.320 cm³, in den Außengehäusen.

In Figur 3 unten ist zum Vergleich eine erfindungsgemäß aufgebaute Filtrationsvorrichtung 10 mit ebenfalls sechs 30"-Filterkapsulen 12 dargestellt, die in einer Parallelschaltung angeordnet sind. Diese Vorrichtung kommt überraschend mit einer Rohrlänge auf der Ablaufseite von nur 790 mm (320 mm + 320 mm + 150 mm) aus. Jedoch wird aus technischen Gründen ein größerer Innendurchmesser von 38 mm benötigt, so dass auf der Ablaufseite ein rechnerisches Totvolumen von 896 cm³ vorhanden ist, zuzüglich 253 cm³ für den analog zum obigen Beispiel verwendeten Ablaufschlauch 32 von 500 mm Länge und 1" Innendurchmesser. Da die erfindungsgemäße Vorrichtung 10 vorzugsweise für den vorteilhaften Betrieb mit stehenden Filterkapsulen 12 konzipiert ist, entfällt in diesem Fall auch der Anteil von 4.320 cm³ Produktlösung, der bei liegenden Filterkapsulen 12 im Außengehäuse stehen bleiben würde.

Somit kann gemäß diesem Beispiel mit der erfindungsgemäßen Vorrichtung 10 im optimalen Fall eine Reduzierung des Produktverlustes um ca. 86 % erreicht werden (ca. 1.150 cm³ gegenüber ca. 8.000 cm³). Selbst wenn die nicht-erfindungsgemäße Vorrichtung 10' mit stehend angeordneten Filterkapsulen 12 und einem Schlauchdurchmesser von nur 3/4" (19,05 mm) betrieben wird, ergibt sich immer noch eine Reduzierung des Produktverlustes um ca. 44 % (ca. 1.150 cm³ gegenüber 2.066 cm³).

Grundsätzlich gilt, dass die Rohrleitungen 22 nicht zwingend einen kreisrunden Querschnitt haben müssen. Vielmehr sind auch andere Formen (z.B oval) und andere Größen als die oben angegebenen möglich. Dies gilt auch für die Verbindungen der im Folgenden beschriebenen Ausführungsform.

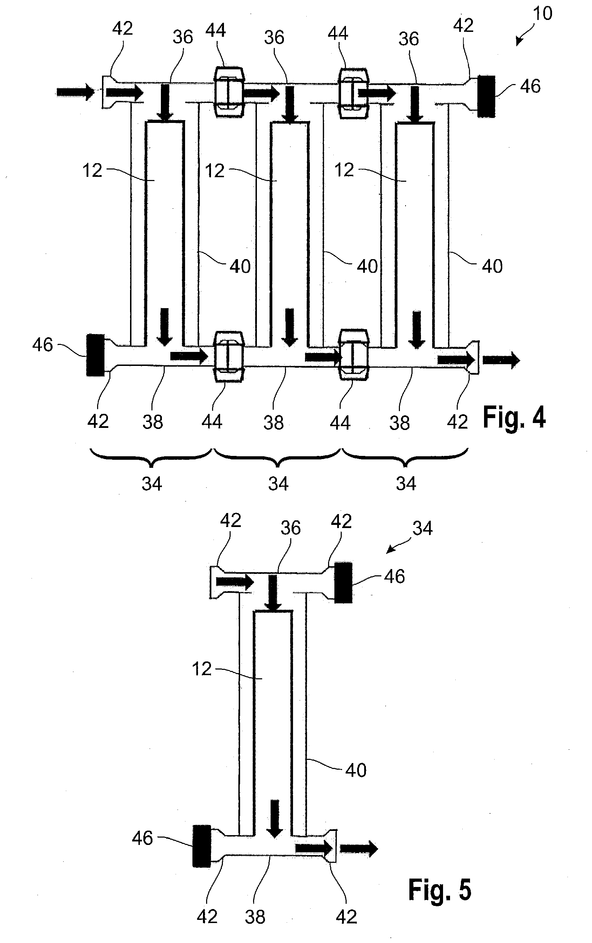

In Figur 4 ist schematisch eine weitere Ausführungsform der erfindungsgemäßen Filtrationsvorrichtung 10 dargestellt, jedoch ohne die zugehörige Halterung 14. Die Besonderheit bei dieser Ausführungsform ist die Verrohrung der Filterkapsulen 12. Anstelle der Rohrleitungen 22 und Abzweigungen 24 sind hier starre, vereinheitlichte Zu- und Ablaufeinheiten 34 aus gammasterilisierbarem Kunststoff vorgesehen. In Figur 5 ist eine solche Zu- und Ablaufeinheit 34 einzeln dargestellt. Für jede Filterkapsule 12 ist eine eigene Zu- und Ablaufeinheit 34 mit einer Zulaufeinrichtung 36 und einer Ablaufeinrichtung 38 vorgesehen, die auf die stirnseitigen Zulauf- und Ablaufanschlüsse der jeweiligen Filterkapsule 12 abgestimmt sind. Die Zulaufeinrichtung 36 und die Ablaufeinrichtung 38 sind entweder vollständig identisch oder wenigstens großteils identisch aufgebaut.

Zwischen der Zulaufeinrichtung 36 und der Ablaufeinrichtung 38 erstrecken sich Verbindungsstreben oder eine Gehäusewand 40, um die beiden Einrichtungen miteinander zu verbinden. In letzterem Fall sind die Filterkapsulen 12 von der vollständig umlaufenden Gehäusewand 40 umgeben und dadurch gegen äußere Einwirkungen geschützt.

Sowohl die Zulaufeinrichtung 36 als auch die Ablaufeinrichtung 38 weisen jeweils zwei entgegengesetzte Außenanschlüsse 42 auf. Durch geeignete Verbindungsbauteile 44, wie etwa TRI-Clamp-Verbindungen, können mehrere Zu- und Ablaufeinheiten 34 aseptisch miteinander verbunden werden. Dabei wird ein zulaufseitiger Außenanschluss 42 einer Filterkapsule 12 mit einem zulaufseitigen Außenanschluss 42 einer benachbarten Filterkapsule 12 verbunden. Ebenso wird ein ablaufseitiger Außenanschluss 42 der einen Filterkapsule 12 mit einem ablaufseitigen Außenanschluss 42 der benachbarten Filterkapsule 12 verbunden. In jedem Fall sind zwischen den Verbindungen Dichtungen vorzusehen. Auf diese Weise können beliebig viele Filterkapsulen 12 für eine parallele Anströmung zusammengefügt werden. Die nicht benötigten Außenanschlüsse 42 werden durch geeignete Verschlüsse 46 aseptisch abgedichtet. Diese Verschlüsse 46 oder auch Blindkappen werden ebenfalls mittels geeigneter Verbindungsbauteile 44 angebracht.

Die Zu- und Ablaufeinheit 34 kann einstückig, als Bausatz oder als vorgefertigte Einheit ausgebildet sein. Insbesondere können mehrere Zulaufeinrichtungen 36 und/oder Ablaufeinrichtungen 38 einstückig ausgebildet oder vormontiert sein, bevor sie an den Filterkapsulen 12 angebracht werden.

### Bezugszeichenliste

- 10: Einweg-Filtrationsvorrichtung
- 12: Filterkapsule
- 14: Halterung
- 16: Seitenwand
- 18: Querstrebe
- 20: Haltemittel
- 22: Rohrleitung
- 24: Abzweigung
- 26: Standfuß
- 28: Schlauch
- 30: Ronde
- 32: Ablaufschlauch
- 34: Zu- und Ablaufeinheit
- 36: Zulaufeinrichtung
- 38: Ablaufeinrichtung
- 40: Gehäusewand
- 42: Außenanschluss
- 44: Verbindungsbauteil
- 46: Verschluss

## Patentansprüche

1. Einweg-Filtrationsvorrichtung (10) für den Einsatz in der pharmazeutischen Fertigung von hochwertigen Wirkstoffen, mit einer Mehrzahl durch Leitungen miteinander verbundener Einweg-Filterkapsulen (12), die von einer starren Halterung (14) so getragen werden, dass die Filterkapsulen (12) in ihrer Gebrauchsstellung aufrecht stehen,
wobei die Einweg-Filtrationsvorrichtung (10) einen zentralen Luftfilter für die Entlüftung der Gesamteinheit der Filterkapsulen (12) und eine zentrale Auffangeinrichtung für die Entleerung der Gesamteinheit der Filterkapsulen (12) aufweist,
wobei die Halterung (14) in allen Richtungen über die Filterkapsulen (12) und die Leitungen hinausragt und ein Gerüst für eine Folienumwicklung der Vorrichtung bildet,
wobei die Halterung (14) wenigstens zwei gegenüberliegende Seitenwände (16) umfasst, welche durch Querstreben (18) miteinander verbunden sind, an denen Haltemittel (20) für die einzelnen Filterkapsulen (12) vorgesehen sind, und
wobei die Einweg-Filtrationsvorrichtung (10) eine sterilisierbare Verpackung umfasst.

2. Einweg-Filtrationsvorrichtung (10) nach Anspruch 1, **dadurch gekennzeichnet, dass** wenigstens die Halterung (14) und die Leitungen zwischen den Filterkapsulen (12) aus einem gammasterilisierbaren Material gebildet sind.

3. Einweg-Filtrationsvorrichtung (10) nach Anspruch 1 oder 2, **dadurch gekennzeichnet, dass** wenigstens die Halterung (14) und die Leitungen zwischen den Filterkapsulen (12) aus einem autoklavierbaren Material hergestellt sind.

4. Einweg-Filtrationsvorrichtung (10) nach einem der vorhergehenden Ansprüche, **dadurch gekennzeichnet, dass** an den Querstreben (18) Haltemittel (20) für die einzelnen Filterkapsulen (12) vorgesehen sind, wobei die Haltemittel (20) mit elastischen Materialien versehen sind.

5. Einweg-Filtrationsvorrichtung (10) nach einem der vorhergehenden Ansprüche, **gekennzeichnet durch** Standfüße (26), auf denen die gesamte Vorrichtung (10) in einer vorgegebenen Stellung sicher und stabil stehen kann.

6. Einweg-Filtrationsvorrichtung (10) nach einem der vorhergehenden Ansprüche, **dadurch gekennzeichnet, dass** wenigstens sechs Filterkapsulen (12) einer Standardgröße von wenigstens 30" (76,2 cm) in einem vorgegebenen Raster angeordnet sind.

7. Einweg-Filtrationsvorrichtung (10) nach einem der vorhergehenden Ansprüche, **dadurch gekennzeichnet, dass** die Filtrationsvorrichtung (10) in ihrer Gesamtheit ein Maß aufspannt, welches sich zum Transport auf Standard-Europaletten eignet.

8. Einweg-Filtrationsvorrichtung (10) nach einem der vorhergehenden Ansprüche, **dadurch gekennzeichnet, dass** die Leitungen zwischen den Filterkapsulen (12) zumindest großteils als starre Rohrleitungen (22) ausgebildet sind.

9. Einweg-Filtrationsvorrichtung (10) nach einem der Ansprüche 1 bis 7, **dadurch gekennzeichnet, dass** die Leitungen zwischen den Filterkapsulen (12) zumindest großteils durch mehrere einheitliche Zu- und Ablaufeinheiten (34) gebildet sind, wobei die Zu- und Ablaufeinheiten (34) vorzugsweise jeweils eine Zulaufeinrichtung (36) und eine Ablaufeinrichtung (38) aufweisen, die mit einem stirnseitigen Zulauf und einem entgegengesetzten stirnseitigen Ablauf einer zugehörigen Filterkapsule (12) verbunden sind, wobei weiter vorzugsweise die Zulaufeinrichtung (36) und die Ablaufeinrichtung (38) wenigstens großteils identisch aufgebaut sind, und/oder wobei weiter vorzugsweise die Zulaufeinrichtung (36) und die Ablaufeinrichtung (38) durch eine Gehäusewand (40) miteinander verbunden sind.

10. Einweg-Filtrationsvorrichtung (10) nach Anspruch 9, **dadurch gekennzeichnet, dass** die Zu- und Ablaufeinheiten (34) durch Verbindungsbauteile (44), die an Außenanschlüssen (42) der Zu- und Ablaufeinheiten (34) angebracht sind, zu einer Einheit zusammengefügt sind.

## Claims

1. A single-use filtration device (10) for use in the pharmaceutical production of high-quality active ingredients, comprising a plurality of single-use filter capsules (12) connected to each other by lines, which are carried by a rigid holder (14) such that the filter capsules (12) are held upright in their position of use,
wherein the single-use filtration device (10) has a central air filter for venting the entire unit of the filter capsules (12) and a central collection device for draining the entire unit of the filter capsules (12),
wherein the holder (14) protrudes in all directions above the filter capsules (12) and the lines and forms a framework for film wrapping the device,
wherein the holder (14) comprises at least two opposing lateral walls (16), which are connected to each other by transverse struts (18), at which holding means (20) are provided for the individual filter capsules (12), and
wherein the single-use filtration device (10) comprises a sterilizable package.

2. The single-use filtration device (10) according to claim 1, **characterized in that** at least the holder (14) and the lines between the filter capsules (12) are formed of a gamma-sterilizable material.

3. The single-use filtration device (10) according to claim 1 or 2, **characterized in that** at least the holder (14) and the lines between the filter capsules (12) are made of an autoclavable material.

4. The single-use filtration device (10) according to any of the foregoing claims, **characterized in that** holding means (20) for the individual filter capsules (12) are provided on the transverse struts (18), wherein the holding means (20) are provided with elastic materials.

5. The single-use filtration device (10) according to any of the foregoing claims, **characterized by** standing feet (26), upon which the entire device (10) can stand securely and stably in a predetermined position.

6. The single-use filtration device (10) according to any of the foregoing claims, **characterized in that** at least six filter capsules (12) of a standard size of at least 30" (76.2 cm) are arranged in a predetermined grid.

7. The single-use filtration device (10) according to any of the foregoing claims, **characterized in that** the filtration device (10) in its entirety spans a dimension which is suitable for transport on standard Euro pallets.

8. The single-use filtration device (10) according to any of the foregoing claims, **characterized in that** the lines between the filter capsules (12) are embodied at least for the most part as rigid pipelines (22).

9. The single-use filtration device (10) according to any of claims 1 to 7, **characterized in that** the lines between the filter capsules (12) are formed at least for the most part by a plurality of uniform inflow and outflow units (34), wherein the inflow and outflow units (34) preferably each have an inflow device (36) and an outflow device (38) which are connected to an end-face inflow and an opposing end-face outflow of an associated filter capsule (12), wherein further preferably the inflow device (36) and the outflow device (38) are at least for the most part identically constructed, and/or wherein further preferably the inflow device (36) and the outflow device (38) are connected to each other by a housing wall (40).

10. The single-use filtration device (10) according to claim 9, **characterized in that** the inflow and outflow units (34) are joined to a unit by connection components (44), which are mounted on external connections (42) of the inflow and outflow units (34).

## Revendications

1. Dispositif de filtration à usage unique (10) pour un usage dans la fabrication pharmaceutique de principes actifs de haute qualité, avec une pluralité de capsules de filtration à usage unique (12), reliées ensemble par des conduites, qui sont portées par une retenue (14) rigide de sorte que les capsules de filtration (12) se tiennent droit dans leur position d'utilisation,
dans lequel le dispositif de filtration à usage unique (10) présente un filtre à air central pour l'aération de l'unité complète des capsules de filtration (12) et un équipement collecteur central pour la vidange de l'unité complète des capsules de filtration (12),
dans lequel la retenue (14) fait saillie dans toutes les directions par-dessus les capsules de filtration (12) et les conduites, et forme une armature pour un enroulement en feuille du dispositif,
dans lequel la retenue (14) comprend au moins deux parois latérales opposées (16), lesquelles sont reliées ensemble par des traverses (18) contre lesquelles des moyens de retenue (20) sont prévus pour les capsules de filtration (12) individuelles, et
dans lequel le dispositif de filtration à usage unique (10) comprend un emballage stérilisable.

2. Dispositif de filtration à usage unique (10) selon la revendication 1, **caractérisé en ce qu'**au moins la retenue (14) et les conduites entre les capsules de filtration (12) sont formées à partir d'un matériau stérilisable aux rayons gamma.

3. Dispositif de filtration à usage unique (10) selon la revendication 1 ou 2, **caractérisé en ce qu'**au moins la retenue (14) et les conduites entre les capsules de filtration (12) sont fabriquées dans un matériau stérilisable à l'autoclave.

4. Dispositif de filtration à usage unique (10) selon l'une des revendications précédentes, **caractérisé en ce que** des moyens de retenue (20) pour les capsules de filtration (12) individuelles sont prévus contre les traverses (18), dans lequel les moyens de retenue (20) sont dotés de matériaux élastiques.

5. Dispositif de filtration à usage unique (10) selon l'une des revendications précédentes, **caractérisé par** des pieds de pose (26) sur lesquels l'ensemble du dispositif (10) peut se tenir debout de façon sûre et stable dans une position prédéfinie.

6. Dispositif de filtration à usage unique (10) selon l'une des revendications précédentes, **caractérisé en ce qu'**au moins six capsules de filtration (12) d'une taille standard d'au moins 30" (76,2 cm) sont agencées dans une trame prédéfinie.

7. Dispositif de filtration à usage unique (10) selon l'une des revendications précédentes, **caractérisé en ce que** le dispositif de filtration (10) dans sa totalité définit une mesure qui convient pour le transport sur des europalettes standard.

8. Dispositif de filtration à usage unique (10) selon l'une des revendications précédentes, **caractérisé en ce que** les conduites entre les capsules de filtration (12) sont conçues au moins en grande partie en tant que tuyauteries (22) rigides.

9. Dispositif de filtration à usage unique (10) selon l'une des revendications 1 à 7, **caractérisé en ce que** les conduites entre les capsules de filtration (12) sont formées au moins en grande partie par plusieurs unités d'admission et d'évacuation (34) unitaires, dans lequel les unités d'admission et d'évacuation (34) présentent respectivement de préférence un équipement d'admission (36) et un équipement d'évacuation (38) qui sont reliés à une admission du côté frontal et à une évacuation du côté frontal opposé d'une capsule de filtration (12) correspondante, dans lequel davantage de préférence l'équipement d'admission (36) et l'équipement d'évacuation (38) sont au moins en grande partie bâtis à l'identique, et/ou dans lequel davantage de préférence l'équipement d'admission (36) et l'équipement d'évacuation (38) sont reliés ensemble par une paroi de logement (40).

10. Dispositif de filtration à usage unique (10) selon la revendication 9, **caractérisé en ce que** les unités d'admission et d'évacuation (34) sont assemblées en une unité par des composantes de liaison (44) qui sont montées contre des raccords extérieurs (42) des unités d'admission et d'évacuation (34).
